# EUROPÄISCHE PATENTSCHRIFT

(11) **EP 1 978 117 B1**
(45) Veröffentlichungstag und Bekanntmachung des Hinweises auf die Patenterteilung: **27.10.2010**
(21) Anmeldenummer: 07716001.8
(22) Anmeldetag: 09.01.2007
(51) Int. Cl.: C22B 11/00, C22B 1/02, C22B 3/10, C22B 3/24

(54) **VERFAHREN ZUR EDELMETALLGEWINNUNG**
METHOD FOR EXTRACTING PRECIOUS METALS
PROCÉDÉ D'EXTRACTION DE MÉTAUX PRÉCIEUX

(30) Priorität: 10.01.2006 RU 2006100779
(43) Veröffentlichungstag der Anmeldung: 08.10.2008
(73) Patentinhaber: ZAKRYTOE AKCIONERNOE OBSHESTVO "URALKALIY-TECHNOLOGIYA, Permsky krai 618426 (RU)
(72) Erfinder: SINEGRIBOV, Viktor Andreevich, Moscow, 125413 (RU); SMETANNIKOV, Andrei Filippovich, Perm, 614061 (RU); UDINA, Tatyana Borisovna, Moscow, 115583 (RU); NOVIKOV, Pavel Urievich, Moscow, 121471 (RU); LOGVINENKO, Izabella Alekseevna, Moscow, 115409 (RU); KRASNOSHTEIN, Arkadiy Evgenievich, Perm, 614039 (RU)
(74) Vertreter: Jeck, Anton
(86) Internationale Anmeldenummer: PCT/RU2007/000004
(87) Internationale Veröffentlichungsnummer: WO 2007/081243

(56) Entgegenhaltungen:
- WO-A1-02/053788
- CA-A1- 1 228 989
- DE-A1- 2 340 183
- DE-A1- 2 914 439
- RU-C- 2 235 140
- RU-C1- 2 113 526
- RU-C1- 2 158 773
- RU-C2- 2 213 793
- RU-C2- 2 235 140
- US-A- 5 074 910
- DATABASE WPI Week 200236 Thomson Scientific, London, GB; AN 2002-327192 XP002520231 & RO 117 310 B (CRUCIN O) 30. Januar 2002 (2002-01-30)

## Beschreibung

Die Erfindung betrifft ein Verfahren zur Edelmetallgewinnung aus einem Mineralrohstoff, das zur Edelmetallgewinnung (Platin, Palladium, Gold usw.) aus verschiedenen Arten von Mineralrohstoffen verwendet werden kann, welche Chloride von Alkali- und Erdalkalimetallen, z.B. als Sammelkonzentrat, enthalten. Das Sammelkonzentrat wird aus den Tonsalz-Abfallprodukten (Schlamm) der Kaliproduktion, aus den Leitlehmen u.a.m. gewonnen.

Bekannt ist ein Verfahren zur Verarbeitung von Schlamm aus der Kaliproduktion (RF-Patent Nr. 2 132 397, IPK C 22 B7/00, veröffentlicht 1999.06.27). Nach diesem Verfahren wird das Auswaschen des goldhaltigen Schlammes zwecks Entsalzung vorgenommen, wobei das durch das Auswaschen gewonnene salinische Wasser entfernt wird. Dem Schlamm wird Süßwasser zugegeben, und das Chlorgas wird durch die entstandene Schlammtrübe durchgelassen. Dabei wird das Chlorieren so durchgeführt, dass sich die Konzentration vom aktiven Chlor in der Laugungslösung innerhalb von 0,3 bis 2,0 Gramm pro Liter variiert. Nach dem Abschluss des Laugeverfahrens erfolgt die Goldgewinnung durch die Sorption.

Die Nachteile des Verfahrens sind erstens die Notwendigkeit eines sorgfältigen Auswaschens der Chloride und zweitens die Verwendung vom elementaren Chlor, einem sehr giftigen Stoff, zur Goldgewinnung.

Bekannt ist ein Verfahren zur Verarbeitung eines Tonsalz-Schlammes und der Chloridsalzgewinnung (RF-Patent Nr. 220 805, IPK C 22 B11/00, 7/00, veröffentlicht 2003.07.10), welches im Folgenden besteht. Die Chloride werden aus dem Schlamm bis zu einem Restgehalt von Chlor innerhalb von 3 bis 7% ausgewaschen. Danach wird der Schlamm verdickt, getrocknet und gesintert. Anschließend erfolgt eine Wärmebehandlung des gereinigten Schlammes bei ununterbrochener Erhitzung bis auf 1.000 - 1.150°C und bei einem Sauerstoffgehalt in den Gasen der Wärmebehandlung innerhalb von 13 bis 16 %. Der Schlamm wird bei dieser Temperatur gehalten, bis das verarbeitete Material mit einem Chlorgehalt von max. 0,3 % gewonnen ist. Die Gasphase der Wärmebehandlung wird mittels Abkühlung, Kondensation und Absorptions-Auswaschen begleitet von einer Aussonderung von Fallwasser der festen Chloride und der Schlammtrübe vom Absorptions-Auswaschen mit einer nachfolgenden Sorption von Gold und Silber aus der Schlammtrübe.

Die Nachteile dieses Verfahrens sind wie folgt:
1. Der hohe Energieaufwand infolge der Durchführung eines Backverfahrens bei der Temperatur von 1.000 - 1.150°C.
2. Die im Schlamm enthaltenen Platinmetalle werden bei der Durchführung des Sublimationsprozesses der Gold- und Silberchloride unter oxidierenden Bedingungen nicht sublimiert und bleiben im Abbrand.
3. Das Auffangen der Gold- und Silbersublimate ist kompliziert und wegen ihres niedrigen Gehalts in der Gasphase nicht vollständig.

Das der Erfindung am nächsten kommende Verfahren der Edelmetallgewinnung aus den Konzentraten, welche aus den Tonsalz-Abfallprodukten (dem Schlamm) der Kaliproduktion (Patent Nr. 2235140, IPK C22B 11/00, veröffentlicht 2004.08.27) gewonnen werden, schließt oxidierende Abröstung des Konzentrats und Säure-Auslaugung vom Abbrand ein. Dabei wird das Konzentrat vor der Abröstung mit dem Sideropyrit und dem Natriumchlorid im Verhältnis von 1:(0,1-0,2):(0,1-0,2) gemöllert. Die oxidierende Abröstung des vorbereiteten Ansatzes erfolgt bei einer Temperatur von 450 - 600°C im Laufe von 1 bis 5 Stunden, und die Auslaugung des Abbrandes wird mit den verdünnten Salz- oder Schwefelsäuren vorgenommen. Dabei erfolgt die Umsetzung der Metalle der Platingruppe und des Goldes in die Lösung.

Die bekannten Verfahren haben den Nachteil, dass der Anteil der Edelmetallgewinnung aus dem Konzentrat unzureichend hoch ist und für die Durchführung des Verfahrens ein hoher Energieaufwand erforderlich ist.

Es ist Aufgabe der Erfindung ein Verfahren der eingangs erwähnten Art zu schaffen, bei dem die Komplexgewinnung aus dem Mineralrohstoff erhöht ist und das Verfahren keinen hohen Energieaufwand erfordert.

Diese Aufgabe wird nach der Erfindung dadurch gelöst, dass Verfahren zur Edelmetallgewinnung aus einem Mineralrohstoff, welcher Chloride der Alkali- und Erdalkalielemente enthält, bei dem seine Abröstung, die Auslaugung des Abbrandes und die Sorption der Edelmetalle eingeschlossen ist.

Die kennzeichnenden Merkmale des vorgeschlagenen Verfahrens gegenüber dem oben genannten bekannten vergleichbaren Verfahren bestehen darin, dass die chlorierende Abröstung des Mineralrohstoffes bei einer Temperatur von 600 - 700°C vorgenommen wird. Die Edelmetalle werden aus dem Abbrand mit einer verdünnten Lösung von Königswasser (HNO₃+HCl) ausgelaugt. Danach werden die Edelmetalle aus der gewonnenen Trübe sorbiert, wobei der Mineralrohstoff, welcher 7 - 13 % der Chloride der Alkali- und Erdalkalimetalle enthält, der Röstung ausgesetzt wird.

Dank dem Vorhandensein dieser Merkmale beim Einsatz des vorgeschlagenen Verfahrens ist die Komplexgewinnung von Metallen der Platingruppe, von Gold und Silber aus dem Mineralrohstoff möglich. Der Mineralrohstoff ist mit Tonsalz-Abfallprodukten (Schlamm) der Kaliproduktion vertreten und enthält Chloride der Alkali- und Erdalkalielemente. Die Wirtschaftlichkeit des Prozesses erhöht sich durch die Anwendung des darin enthaltenen Chlorierungsmittels, durch die Kürzung der Anzahl der Prozessschritte (Verzicht auf solche Verfahrensschritte wie Möllerung mit einem Chlorierungsmittel), durch die Temperatursenkung bei der Abröstung im Vergleich zum bekannten Verfahren und durch die Auslaugung der Edelmetalle aus dem Abbrand mittels der vedünnten Säure.

Das Verfahren wird auf folgende Weise ausgeführt:

Für die Abröstung und die nachfolgenden Verfahrensschritte wird das Konzentrat verwendet, welches bei der Anreicherung des Ausgangsmineralrohstoffes erzeugt wird. Der Ausgangsmineralrohstoff enthält Chloride der Alkali- und Erdalkalielemente (die Tonsalz-Abfallprodukte der Kaliproduktion). Der Restgehalt der Kali- und Natriumsalze beträgt maximal 7 bis 13 %, und die Feuchtigkeit beläuft sich max. auf 5 %. Das vorher gemahlene Naturkonzentrat (Leitlehme) mit einem Na-Salzgehalt von max. 15 % und mit einer Restfeuchtigkeit von nicht mehr als 5 % kann auch verwendet werden.

Die Abröstung bewirkt die Oxydierung der im Mineralrohstoff enthaltenen organischen Verbindungen, den Aufschluss und die Chlorierung der Edelmetalle. Der zeugte Abbrand wird durch die verdünnte Lösung vom Königswasser ausgelaugt. Dabei werden die löslichen Salze der Edelmetalle, die Alkali- und Erdalkalimetalle, Aluminium, Eisen und andere Metalle gewonnen. Anschließend erfolgt die Sorption der Edelmetalle aus der Trübe, z.B. durch den Teer AM-2B.

Tabelle 1 enthält die Angaben zur Edelmetallgewinnung. Sie erfolgt unter direkter (ohne Abröstung) Auslaugung von 3 Proben des Schlammes (Ausgangsprobe und 2 teilweise gereinigte Proben mit entfernten Chloriden) durch eine 3,8-Normallösung von Königswasser im Verhältnis fest: flüssig = 1:4 und bei einer Temperatur von 65 - 70°C im Laufe von 4 Stunden, sowie unter Sorption der Edelmetalle durch den Anionenaustauscher AM-2B und durch Teeranalyse in Bezug auf den Edelmetall-Gehalt.

**Tabelle 1**

| Edelmetallgewinnung in die Handelslösung | | | | |
|---|---|---|---|---|
| | | | | |
| Chloride- Gehalt*, % | Gewinnung, g/t | | | |
| | Pt | Pd | Au | Ag |
| 50,9 | <0,032 | 1,45 | 0,76 | 1,17 |
| 32,2 | <0,026 | 0,34 | 0,26 | 0,42 |
| 5,6 | <0,015 | 0,14 | 0,25 | 0,32 |

| | | | | |
|---|---|---|---|---|
| * Die Summe der Chloride von Na, K und Mg in der Ausgangsprobe | | | | |

Die Auslaugung des Abbrandes erfolgt im Verhältnis fest: flüssig = 1:4. Der größere Verbrauch der Laugenlösung ist wegen der niedrigen Konzentration der Edelmetalle in der Laugenlösung unzweckmäßig, was ihre Gewinnung bei der Verarbeitung der Lösung erschwert. Die Abnahme des Verhältnisses fest : flüssig mit der Absicht, die Konzentration der Edelmetalle nach der Abkühlung der Lösung wegen des hohen Salz-Gehaltes (Tabelle 2) zu erhöhen, verursacht ihre Kristallisation, was den Sorptionsvorgang der Edelmetalle komplizierter macht.

Die niedrige Konzetration der Edelmetalle in der Lösung, welche infolge der Auslaugung vom Abbrand gewonnen wurde, sowie schlechte Verdichtbarkeit und Filtrierbarkeit der Trübe bestimmen die Auswahl des optimalen Verfahrens für ihre weitere Verarbeitung bei der Sorption der Edelmetalle aus der Trübe.

**Tabelle**

| Konzentration der Grundmetallbeimischungen in den Lösungen der Auslaugung | | | | | | | |
|---|---|---|---|---|---|---|---|
| | | | | | | | |
| Chloride-Gehalt in dem Schlamm, % | T_{Abr}, °C | Konzentration in der Lösung, g/dm³ | | | | | |
| | | Na | K | Mg | Ca | Al | Fe |
| | 500 | 3,16 | 4,96 | 5,0 | 5,62 | 2,3 | 6,6 |
| 12,8 | 600 | 2,54 | 5,03 | 5,52 | 5,12 | 3,1 | 4,5 |
| | 700 | 2,2 | 6,61 | 4,25 | 5,12 | 3,8 | 2,23 |
| | 800 | 1,94 | 6,17 | 3,12 | 5,93 | 10,4 | 3,8 |
| 7,2 | 500 | 1,62 | 3,8 | 6,1 | 7,3 | 2,47 | 5,5 |
| | 600 | 1,85 | 3,59 | 5,9 | 7,0 | 3,5 | 6,35 |
| | 700 | 1,45 | 6,52 | 4,7 | 5,94 | 3,2 | 2,6 |
| | 800 | 1,28 | 5,14 | 3,7 | 5,9 | 3,0 | 2,3 |

Tabelle 3 enthält die Ergebnisse der Edelmetallgewinnung, welche nach der Abröstung des Schlammes mit einem Chloridgehalt von 7,2 bis 12,8 % innerhalb eines

Temperaturbereichs von 500 - 800°C unter nachfolgender Auslaugung des Abbrandes und der Verarbeitung der gewonnenen Trübe unter den oben genannten Bedingungen erreicht wurden. Wenn der Chloridgehalt in dem Schlamm 12,8 % beträgt, wird die maximale und stabile Gewinnung von Palladium (ca. 4,5 g/t, was wesentlich höher ist gegenüber der Auslaugung von nicht gebranntem Rohstoff) sowie von Platin und Gold nach der Abröstung bei Temperaturen von 500 - 700°C erreicht. Wenn der Schlamm 7,2 % Chlorid enthält, geht der Bereich der optimalen Temperaturen auf 600 bis 700°C zurück.

**Tabelle 3**

| Edelmetallgewinnung nach Schlammen-Abröstung | | | | | | |
|---|---|---|---|---|---|---|
| | | | | | | |
| Ghlorid-Gehalt*, % | t_{Abr}, °C | Gewinnungsangaben, g/t. | | | | |
| | | Pt | Pd | Au | Ag | Cu |
| | 500 | 0,20 | 4,64 | 0,08 | 5,56 | 1,26 |
| 12,8 | 600 | 0,10 | 2,08 | 0,12 | 7,82 | 0,83 |
| | 700 | 0,16 | 4,40 | 0,08 | 5,75 | 0,96 |
| | 800 | 0,08 | 0,46 | 0,03 | 6,69 | 22,6 |
| | 500 | < 0,004 | 0,3 | <0,004 | 1,0 | 3,56 |
| 7,2 | 600 | 0,58 | 5,86 | 0,04 | 1,51 | 2,00 |
| | 700 | 0,83 | 3,41 | 0,06 | 4,3 | 2,1 |
| | 800 | 0,28 | 0,51 | 0,29 | 7,80 | 1,61 |

Beim ersten Fall bleibt die Silber-Gewinnung innerhalb des Abröstungtemperaturbereichs von 500 - 800°C unverändert. Beim zweiten Fall hängt die Gewinnungsrate stark von der Temperatur ab, und erreicht die Maximalwerte bei 800°C.

Gemäß den Analyse-Angaben, wenn der Schlamm 12,8 % Chlorid enthält, reagieren nur ca. 5,3 - 6,3 % der Summe der Natrium- und Kaliumchloride mit den in dem Schlamm enthaltenen Mineralien infolge ihrer Abröstung bei 500 - 800°C. Dadurch entstehen die Chloride der Edelmetalle und auch diese von Magnesium, Kalzium, Eisen, Aluminium u.a.m. Die übrigen 5,7 - 6,7 % der Chloride werden von der Auslaugenlösung aufgenommen. Der größere Chloridgehalt im verarbeitenden Stoff führt zur Kostenerhöhung im Zusammenhang mit seiner Abröstung und erschwert die Verarbeitung des Abbrandes wegen der Auslaugung des Überschusses an Chloriden.

Somit beträgt die optimale Temperatur der Chlorierungsabröstung 600 bis 700°C beim Natrium-, Kalium- und Magnium-Chloridgehalt von 7 - 13 %.

Der technische Nutzeffekt des vorgeschlagenen Verfahrens der Edelmetallgewinnung aus dem Mineralrohstoff (dem Konzentrat, welches aus Tonsalz-Abfallprodukten der Kaliproduktion oder aus den Leitlehmen erzeugt wird), welcher Chloride der Alkali- und Erdalkalielemente enthält, besteht darin, dass bei seiner Anwendung die Komplexgewinnung von Metallen der Platingruppe, von Gold und Silber aus dem angegebenen Rohstoff möglich ist. Die Wirtschaftlichkeit des Prozesses erhöht sich durch die Anwendung des darin enthaltenen Chlorierungsmittels, durch die Minderung der Anzahl der Verfahrensschritte (Verzicht auf die Verfahrensschritte der Möllerung mit dem Chlorierungsmittel), durch die Temperatursenkung der Abröstung im Vergleich zum bekannten Verfahren und durch die Auslaugung der Edelmetalle aus dem Abbrand mittels der vedünnten Säure.

## Patentansprüche

1. Verfahren zur Edelmetallgewinnung aus einem Mineralrohstoff, welcher Chloride der Alkali- und Erdalkalielemente enthält, bei dem seine Abröstung, die Auslaugung des Abbrandes und die Sorption der Edelmetalle eingeschlossen ist,
ist **dadurch gekennzeichnet,**
**dass** die Chlorierungsabröstung des Mineralrohstoffes bei einer Temperatur von 600 - 700°C erfolgt, die Edelmetalle aus dem Abbrand mit einer verdünnten Lösung vom Königswasser (HNO₃+HCl) ausgelaugt und die Edelmetalle aus der gewonnenen Trübe sorbiert werden.

2. Verfahren nach Anspruch 1,
**dadurch gekennzeichnet,**
**dass** der Mineralrohstoff, der 7 - 13 % an Chloriden von Alkali- und Erdalkalimetallen enthält, geröstet wird.

3. Verfahren nach Anspruch 1,
**dadurch gekennzeichnet,**
**dass** bei einem Chloridgehalt von über 13 % im verarbeiteten Mineralrohstoff die Anreichung des Rohstoffes unter Auswaschen des Überschusses an Chlorid, der Verdichtung der Schlammtrübe und unter Beförderung des verdichteten Erzeugnisses nach dem Trocknen zur Abröstung vorgenommen wird.

## Claims

1. A method for the extraction of precious metals from raw mineral material containing chlorides of alkali and earth alkali elements, which method includes their roasting, leaching of the roasting residue and the absorption of the precious metals,
**characterized in that**
the chlorination roasting of the raw mineral material takes place at a temperature of 600 to 700°C, the precious metals are leached out of the roasting residue by means of a diluted solution of aqua regia (HNO₃+HCl), and the precious metals are absorbed from the sludge obtained.

2. The method in accordance with claim 1,
**characterized in that**
the raw mineral material, which contains 7 to 13% of chlorides of alkali and earth alkali elements, is roasted.

3. The method in accordance with claim 1,
**characterized in that,**
with a chloride content of the processed raw material of more than 13%, the enrichment of the raw material is performed by washing out the excess of chloride, condensing the sludge water and, after drying, transporting the condensed material for roasting.

## Revendications

1. Procédé de récupération ou d'extraction de métaux nobles à partir d'une matière brute minérale qui contient des chlorures des éléments alcalins et alcalino-terreux, dans lequel on inclut son grillage, la lixiviation du résidu de grillage et la sorption des métaux nobles,
**caractérisé en ce que** le grillage de chloration de la matière brute minérale se fait à une température de 600 à 700 °C, **en ce que** les métaux nobles issus du résidu de grillage sont lixiviés avec une solution diluée d'eau régale (HNO₃ + HCl) et **en ce que** les métaux nobles sont sorbés depuis l'eau schlammeuse recueillie.

2. Procédé selon la revendication 1, **caractérisé en ce que** l'on grille la matière brute minérale qui contient 7 à 13 % de chlorures de métaux alcalins et alcalino-terreux.

3. Procédé selon la revendication 1, **caractérisé en ce que**, pour une teneur en chlorure supérieure à 13 % dans la matière brute minérale transformée, on entreprend la concentration de la matière brute par le rinçage de l'excès de chlorure, le compactage de la boue schlammeuse et le transport du produit compacté après le séchage en vue du grillage.
